Europäisches Patentamt

**European Patent Office**

**Office européen des brevets**

(19)

(11) **EP 1 417 509 B1**

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(51) Int Cl.⁷: $G01S\ 7/52$, G01S 15/87

(21) Anmeldenummer: 02745114.5

(86) Internationale Anmeldenummer:
**PCT/DE2002/002017**

(22) Anmeldetag: **01.06.2002**

(87) Internationale Veröffentlichungsnummer:
**WO 2003/016941 (27.02.2003 Gazette 2003/09)**

(54) **ECHOSIGNALÜBERWACHUNGSVORRICHTUNG UND -VERFAHREN**

MONITORING DEVICE AND METHOD USING ECHO SIGNALS

DISPOSITIF ET PROCEDE DE SURVEILLANCE UTILISANT DES SIGNAUX D'ECHO

(84) Benannte Vertragsstaaten:
**DE FR GB IT SE**

(30) Priorität: **02.08.2001 DE 10138001**

(43) Veröffentlichungstag der Anmeldung:
**12.05.2004 Patentblatt 2004/20**

(73) Patentinhaber: **ROBERT BOSCH GMBH**
**70422 Stuttgart (DE)**

(72) Erfinder:
• **KLINNERT, Roland**
**70825 Korntal-Muenchingen (DE)**

• **ZOTT, Christian**
**74321 Bietigheim-Bissingen (DE)**
• **SCHMIDT, Hauke**
**94304 Palo Alto (US)**
• **SCHLUFF, Steffen**
**68259 Mannheim (DE)**
• **WIRNITZER, Bernhard**
**69502 Hemsbach (DE)**

(56) Entgegenhaltungen:
**EP-A- 1 058 126      DE-A- 4 023 538**
**GB-A- 2 317 316**

**Beschreibung**

Stand der Technik

Die vorliegende Erfindung betrifft eine Vorrichtung und ein Verfahren zur Umgebungsüberwachung mit Hilfe von Echosignalen. Derartige Vorrichtungen und Verfahren kommen insbesondere bei Kraftfahrzeugen zum Einsatz, wo mit Hilfe von Sende-/ Empfangseinheiten, insbesondere für Ultraschall-, Radar- und Infrarotsignale, die zu mehreren an der Kraftfahrzeugkarosserie fest montiert sind, Hindernisse in der Umgebung des Fahrzeugs detektiert werden und ggf, ein Warnsignal erzeugt wird, um den Fahrer des Fahrzeugs in unübersichtlichen Verkehrssituationen wie etwa beim Einparken vor einer potentiell gefährlichen Annäherung an ein Hindernis zu warnen.

Eine derartige Überwachungsvorrichtung und ein Verfahren zu ihrem Betrieb sind z. B. aus DE 40 23 538 A1 bekannt.

Die Genauigkeit, mit der derartige Vorrichtungen arbeiten, hängt in hohem Maße von der Genauigkeit ab, mit der die relativen Positionen der mehreren Sende-/ Empfangseinheiten einer solchen Überwachungsvorrichtung zueinander bekannt sind und in die Berechnung der Entfernung zu einem Hindernis anhand der empfangenen Echosignale einbezogen werden können.

Insbesondere eine Grobklassifikation des Hindernisses (Wand, Punkt, Inneneck, ...) gemäß der in der DE 4023538 A1 angegebenen mathematischen Beziehungen erfordert eine genaue Kenntnis der relativen Positionen. Hinzu kommt, daß zwar bei einem weit entfernten Hindernis, d.h. einem Hindernis, dessen Entfernung zum Fahrzeug deutlich größer ist als die Entfernungen der Sende-/ Empfangseinheiten untereinander, die von den einzelnen Sende-/ Empfangseinheiten erfassten Direktechos nur gering unterschiedliche Laufzeiten aufweisen und diese Laufzeiten einen brauchbaren Näherungswert für die tatsächliche Entfernung darstellen, aber bei einem nahen punktförmigen Hindernis, z.B. einem Pfosten, dessen Entfernung zum Fahrzeug kleiner ist als die Entfernung der Sende-/ Empfangseinheiten, ist weder ein Direktecho noch ein Kreuzecho eine brauchbare Näherung für die tatsächliche Entfernung. Wenn sich z.B. das Fahrzeug einem Pfosten so nähert, dass es an einem Punkt zwischen zwei Sende-/ Empfangseinheiten gegen den Pfosten stoßen könnte, so konvergiert bei fortschreitender Annäherung an den Pfosten die Laufzeit des von diesem zurückgeworfenen Kreuzechos nicht gegen Null, sondern gegen die Laufzeit, die der Entfernung zwischen den beiden Sende-/ Empfangseinheiten entspricht. Die Genauigkeit, mit der diese letztere Entfernung bekannt ist, ist daher entscheidend für die untere Grenze, bis zu der die Überwachungsvorrichtung noch in der Lage ist, eine Entfernung zu einem Hindernis mit einer brauchbaren Genauigkeit abzuschätzen.

Dieses Problem hat dazu geführt, dass Echosignalüberwachungsvorrichtungen für Kraftfahrzeuge bislang praktisch nur vom Fahrzeughersteller in Neuwagen eingebaut werden. Bei der Nachrüstung solcher Vorrichtungen ist es sehr schwierig, die für zuverlässige Messungen erforderliche Genauigkeit bei der Positionierung der Sende-/ Empfangseinheiten zu gewährleisten. Dies ist insbesondere dann der Fall, wenn die Nachrüstung durch die Fahrzeugbesitzer selbst vorgenommen wird.

Vorteile der Erfindung

Durch die vorliegende Erfindung wird eine Echosignalüberwachungsvorrichtung und ein Verfahren zum Bestimmen der relativen Position von Sende-/ Empfangseinheiten in einer Echosignalüberwachungsvorrichtung geschaffen, die eine Entfernungsmessung mit einer hohen, von der Präzision, mit der die Sende-/ Empfangseinheiten beim Einbau.positioniert worden sind, praktisch unabhängigen Genauigkeit ermöglichen.

Grundgedanke der Erfindung ist, dass es mit Hilfe der Echosignale nicht nur möglich ist, bei bekannter Entfernung der Sende-/ Empfangseinheiten voneinander ihren Abstand von einem Hindernis zu messen, sondern dass mit Hilfe redundanter Messungen auch ihre Entfernung untereinander messbar ist (Die Messung der Entfernungen der Sende-/ Empfangseinheiten untereinander wird im folgenden auch als Kalibrierung bezeichnet). Es genügt daher, wenn beim Einbau der erfindungsgemäßen Vorrichtung vorgegebene Einbaupositionen nur näherungsweise eingehalten werden; durch nachträgliches Messen der Abstände der Sende-/ Empfangseinheiten voneinander und Anwenden dieser gemessenen Abstände bei der Auswertung von im Normalbetrieb gemessenen Echolaufzeiten ist dennoch eine exakte Bestimmung des Abstands zu einem Hindernis möglich.

Diese Eigenschaft erlaubt es darüber hinaus, ein identisches Modell von Überwachungsvorrichtung an einer Vielzahl von Fahrzeugtypen mit unterschiedlichen Einbaupositionen für die Sende-/ Empfangseinheiten zu verwenden; die spezifische Anpassung der Vorrichtung an die geometrischen Gegebenheiten eines Fahrzeugs erfolgt selbsttätig nach dem Einbau.

Selbstverständlich kann die Messung der Abstände nicht nur beim Einbau erfolgen, sondern auch zu beliebigen späteren Zeitpunkten - selbsttätig oder auf Eingabe eines Befehls durch einen Benutzer - wiederholt werden. So kann z.B. vorgesehen werden, dass die Vorrichtung - in später noch genauer beschriebener Weise - anhand der erfassten Echolaufzeiten eine zur Durchführung einer Kalibrierung geeignete Umgebungssituation erkennt und, wenn eine solche vorliegt, eine Kalibrierung durchführt.

Um die Auswertung der empfangenen Echosignale zu vereinfachen, weisen die Sende-/ Empfangseinheiten zweckmäßigerweise eine Erfassungsschwelle auf, die die Amplitude eines empfangenen Echos überschreiten muss, um von der Sende-/ Empfangseinheit erfasst zu werden, und die von einem hohen Wert unmittelbar nach dem Aussenden eines Signals durch die Sende-/Empfangseinheit allmählich auf einen niedrigen Wert abfällt. Diese Erfassungsschwelle ist so festgelegt, dass sie stets eine sichere Erfassung des Direktechos erlaubt. Dies vereinfacht die Auswertung des Echosignals an der ersten Einheit. Die Anwendung der Erfassungsschwelle kann dazu führen, dass ein Kreuzecho einer zweiten Sende-/ Empfangseinheit, die zu einem früheren Zeitpunkt als eine erste Sende-/ Empfangseinheit gesendet hat, von der ersten Einheit nicht erfasst wird. Umgekehrt erfasst aber die zweite Einheit ein von der ersten kommendes Kreuzechosignal, da die von ihr verwendete Erfassungsschwelle zum Zeitpunkt des Eintreffens des Kreuzechos niedriger ist als die der ersten. Da die zu messende Kreuzecholaufzeit auf beiden Wegen die gleiche ist, geht keine aus den Echos gewinnbare Entfernungsinformation verloren.

Die Zeitpunkte, an denen die Sende-/ Empfangseinheiten jeweils impulsförmige Signale aussenden, werden vorzugsweise von einer Steuereinheit nach einem stochastischen Muster festgelegt. Dies ermöglicht eine einfache Unterscheidung der Kreuzechos von den Direktechos, so dass die Signale zeitlich verschränkt ausgesendet werden können und so eine Vielzahl von Messungen innerhalb einer kurzen Zeitspanne durchgeführt werden kann.

Zur Auswertung dieser Echosignale sind adaptive Filter besonders geeignet. Deren Verwendung in einer Echosignalüberwachungsvorrichtnug ist aus DE 198 02 724 A1 bekannt.

Zum Bestimmen der relativen Position einer Mehrzahl von Sende- und Empfangseinheiten einer Echosignalüberwachungsvorrichtung ist es im Prinzip ausreichend, für wenigstens ein Paar von Sende- und Empfangseinheiten die Direkt-Echolaufzeiten von einer Sende- und Empfangseinheit zu einem geradlinigen Hindernis und zurück zur gleichen Sende- und Empfangseinheit und die Kreuzecholaufzeit von einer der Sende- und Empfangseinheiten über das Hindernis zur anderen Sende- und Empfangseinheit des Paars zu messen, um anhand der erhaltenen Laufzeiten deren Abstand zu berechnen.

Zur Verbesserung der Genauigkeit ist es allerdings zweckmäßig, die Echolaufzeiten wiederholt zu messen und bei der Berechnung des Abstands eine Mittelung über die wiederholten Messungen vorzunehmen. Dabei ist es möglich und sogar wünschenswert, dass die Echosignalüberwachungsvorrichtung während der Durchführung dieser Messungen langsam bewegt wird.

Es empfiehlt sich, zur Durchführung dieser Kalibriermessungen eine Mehrzahl von Paaren unter den mehreren Sende-/ Empfangseinheiten der Echosignalüberwachungsvorrichtung zu definieren und die Echolaufzeiten für diese Mehrzahl von Paaren zu messen.

Bei Verwendung einer ausreichenden Anzahl von Paaren können so redundante Messungen gewonnen werden, die einen Rückschluss auf die Zuverlässigkeit der einzelnen Messungen zulassen. Die Auswertung solcher redundanter Messungen erfolgt vorzugsweise mit einem Fehlerminimierungsverfahren, insbesondere dem Verfahren der kleinsten Fehlerquadrate.

Wenn eine Echolaufzeit mehrmals nacheinander gemessen wird, so führen Rauschanteile im empfangenen Echosignal zu einer Fluktuation der gemessenen Echolaufzeit. Je stärker diese Fluktuation ist, um so niedriger kann das Signal-Rausch-Verhältnis des empfangenen Echosignals angenommen werden, und um so geringer ist die Zuverlässigkeit der Messung. Eine Messung wird daher zweckmäßigerweise bei der Fehlerminimierung mit einer Gewichtung berücksichtigt, die um so größer ist, je kleiner die Fluktuation ist.

Auch die relative Position, in der sich die Sende-/ Empfangseinheiten und ein ein Echo lieferndes Hindernis relativ zueinander befinden, hat einen Einfluss auf die Zuverlässigkeit, mit der aus einer Messung auf den Abstand der Sende-/ Empfangseinheiten geschlossen werden kann. Für eine gegebene Konstellation von Sensoranordnungen und Hindernissen kann ein Geometrie-Güte-Maß angegeben werden, das zur Gewichtung der Einzelmessungen herangezogen werden kann. Das Geometrie-Güte-Maß stellt dabei einen Fehler-Verstäkungsfaktor dar, d.h. bei einer hohen Geometrie-Güte ist die Empfindlichkeit der Sensorabstandsschätzung gering gegenüber Meßfehlern und umgekehrt. Ferner kann auch anhand der Messungen ein Geometrie-Güte-Maß bestimmt werden, welches zur Erhöhung der Schätzgenauigheit der Sensorposition verwendet wird.

Es gilt z.B.: Je näher das Hindernis am Fahrzeug liegt, d. h. je stumpfer der Winkel ist, in dem er ein Kreuzecho reflektiert, um so stärker ist der Einfluss des Abstandes der Sende-/ Empfangseinheiten auf die Kreuzecholaufzeit. Gleichzeitig ergeben sich in einem solchen Fall bei der Reflexion an einem geradlinigen Hindernis Laufzeiten der Kreuzechos, die deutlich größer sind als die des Direktechos. Es ist daher günstig, die Zuverlässigkeit einer Messung einer Kreuzecholaufzeit anhand ihres Verhältnisses zu den Direktecholaufzeiten der an der Messung der Kreuzecholaufzeit beteiligten Sende-/ Empfangseinheiten zu beurteilen und die Messung mit einer Gewichtung zu berücksichtigen, die um so größer ist, je größer die Kreuzecholaufzeit im Verhältnis zu den Direktecholaufzeiten ist.

Weitere Merkmale und Vorteile von Ausführungsformen der Erfindung ergeben sich aus der nachfolgenden Beschreibung mit Bezug auf die beigefügten Figuren.

Kurzbeschreibung der Figuren

Es zeigen:

Fig. 1     eine Anordnung von vier Sende-/ Empfangseinheiten einer erfindungsgemäßen Echosignalüberwachungsvorrichtung in einem Kalibrierszenario;

Fig. 2     einen Ausschnitt aus einer Schaltungsanordnung zur Auswertung der von den Sende-/ Empfangseinheiten erfassten Echosignale;

Fig. 3     ein Blockschaltbild eines adaptiven Filters; und

Fig. 4     ein Schema der Signalverarbeitung in der erfindungsgemäßen Echosignalüberwachungsvorrichtung.

Beschreibung der bevorzugten Ausgestaltungen

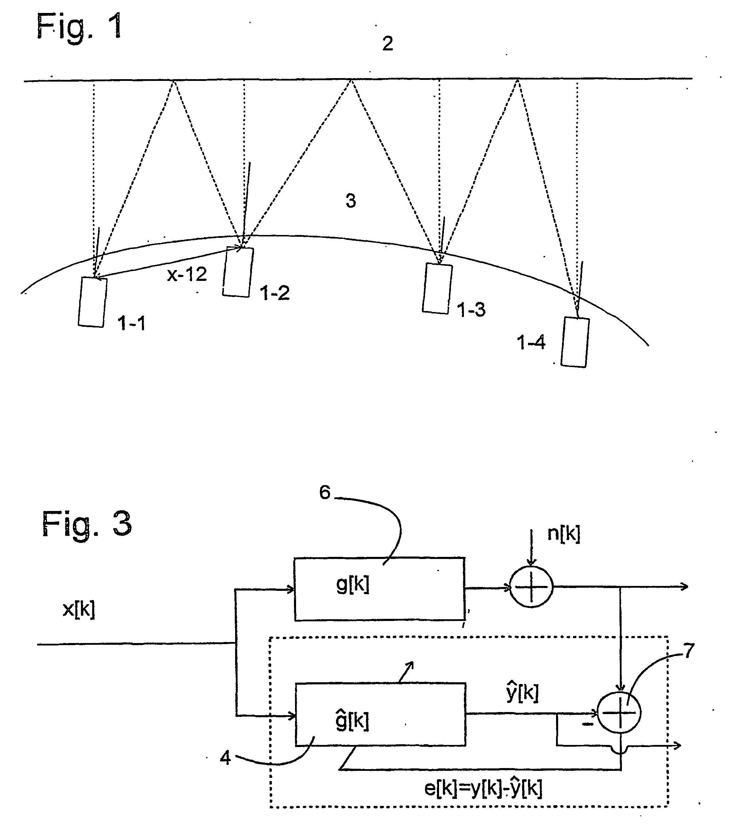

Fig. 1 zeigt eine.Anordnung von vier Sende-/ Empfangseinheiten 1_1, 1_2, 1_3 und 1_4 einer Echosignalüberwachungsvorrichtung gegenüber einer Wand 2, die ein mit der Echosignalüberwachungsvorrichtung zu erfassendes geradliniges Hindernis darstellt. Die Echosignalüberwachungsvorrichtung ist in einem Kraftfahrzeug eingebaut; die gekrümmte Linie, entlang der die Sende-/ Empfangseinheiten 1_1 bis 1_4 verteilt sind, mag z.B. den Verlauf eines Stoßfängers 3 des Kraftfahrzeugs in Draufsicht darstellen.

Die Sende-/ Empfangseinheiten 1_1 bis 1_4 senden zu von einer in der Fig. nicht dargestellten Steuereinheit zufällig festgelegten Zeitpunkten impulsförmige Echosignale aus, die von der Wand 2 reflektiert werden. Dabei wird ein Direktecho jeweils von den entsprechenden Punkten der Wand 2 zurückgeworfen, deren Oberflächennormale eine der Sende-/ Empfangseinheiten 1_1,...1_4 kreuzt. Kreuzechos werden von denjenigen Punkten 2_ik der Wand 2 zurückgeworfen, an denen der Einfallswinkel eines Signalimpulses von der Sende-/ Empfangseinheit 1_i gleich dem Ausfallwinkel zur Einheit 1_k ist. Wenn T_ik jeweils die Echolaufzeit von der Sende-/ Empfangseinheit 1_i zum Hindernis 2 und zurück zur Einheit 1_k, x_ik den linearen Abstand zwischen den Einheiten 1_i und 1_k und c die Schallgeschwindigkeit bezeichnet, so ist aus DE 40 23 538 bekannt, dass die folgende Beziehung gilt:

$$T\_ik^2 = (x\_ik/c)^2 + (T\_ii)(T\_kk) \qquad (1)$$

Wenn das Hindernis nicht geradlinig, sondern punktförmig wie ein Pfosten, konvex wie etwa ein Kreis, eine Kante oder konkav wie etwa ein Inneneck ist, so gilt die Beziehung (1) nicht allgemein, d.h. es gibt lediglich einzelne Positionen der Sende-/ Empfangseinheiten, für die sie gilt, und sie ist nicht für alle Paare i,k von Sende-/ Empfangseinheiten gleichzeitig erfüllbar.

Die Echosignalüberwachungsvorrichtung hat zwei Betriebszustände.

Ein erster ist der sog. Normalbetriebszustand, in dem die Steuereinheit anhand der von den Sende-/ Empfangseinheiten gemessenen Direkt- und Kreuzecholaufzeiten fortlaufend den Abstand des Fahrzeugs zu Hindernissen in dessen Umgebung ermittelt und überwacht, wobei sie die Abstände x_ik der Sende-/ Empfangseinheiten als bekannt voraussetzt. Dieser Betriebszustand entspricht der herkömmlichen Betriebsweise von Echosignalüberwachungsvorrichtungen und wird daher hier nicht im Detail behandelt.

Fakultativ kann darüber hinaus anhand des Verhältnisses der Kreuzecho- zu den Direktecholaufzeiten noch eine Klassifizierung eines erfassten Hindernisses in einen der Typen punktförmiges oder konvexes Hindernis, geradliniges oder ebenes Hindernis (Wand) oder konkaves Hindernis erfolgen. Da diese Klassifikation in der Patentanmeldung DE 40 23 538 eingehend behandelt ist und nur mittelbar mit dem Gegenstand der vorliegenden Erfindung zusammenhängt, wird an dieser Stelle nicht weiter auf sie eingegangen. Im Rahmen der vorliegenden Erfindung wird ein Hindernis als eben klassifiziert, wenn für alle Paare (1_i, 1_k) von Sende-/ Empfangseinheiten, die in der Lage sind, ein Kreuzecho voneinander zu empfangen, die gemessenen Echolaufzeiten (T_ik) die Beziehung (1) mit einer hinreichenden Genauigkeit erfüllen. Was in diesem Zusammenhang eine "hinreichende Genauigkeit" ist, wird später noch genauer erläutert.

Der zweite Betriebszustand ist ein sog. Kalibrierbetriebszustand. Einer einfachen Ausgestaltung der Erfindung zufolge kann dieser Betriebszustand von einem Benutzer der Vorrichtung bzw. dem Fahrer des Kraftfahrzeuges, in dem die Echosignalerfassungsvorrichtung eingebaut ist, durch Eingabe eines diesbezüglichen Befehls in die Steuereinheit herbeigeführt werden. Bei dieser Ausgestaltung ist nicht erforderlich, dass die Echosignalerfassungsvorrichtung in der Lage ist, das erfasste Hindernis in der oben angegebenen Weise zu klassifizieren.

Einer anderen Ausgestaltung zufolge ist die Echosignalerfassungsvorrichtung in der Lage, selbstständig in den Kalibrierbetriebszustand zu wechseln, wenn die Klassifizierung eines erfassten Hindernisses wiederholt ergeben hat, dass dieses geradlinig und damit zur Durchführung einer Kalibrierung geeignet ist. Als weitere Bedingung, die für das Umschalten in den Kalibrierbetriebszustand erfüllt sein muss, kann vorgesehen werden, dass die Echosignalüberwachungsvorrichtung bzw. das Fahrzeug, in das sie eingebaut ist, sich mit einer geringen Geschwindigkeit bewegt. Dadurch wird erreicht, dass aufeinanderfolgende Echolaufzeitmessungen jeweils in verschiedenen Stellungen des Fahrzeugs in Bezug zu dem Hindernis durchgeführt werden, so dass Messfehler, die bei den einzelnen Messungen auftreten, nur schwach korreliert sind und sich bei einer Mittelung der aus den gemessenen Laufzeiten berechneten Abstände x_ik der Sende-/ Empfangseinheiten weitgehend gegenseitig kompensieren.

Im Kalibrierbetriebszustand senden die Sende-/ Empfangseinheiten weiterhin Impulse zu von der Steuereinheit festgelegten Zeitpunkten aus, und die resultierenden Echolaufzeiten werden erfasst.

Die Erfassung jeweils eines Messwerts von Direkt- oder Kreuzecholaufzeiten eines Paars von Sende-/ Empfangseinheiten erstreckt sich notwendigerweise über ein endliches Zeitintervall, zum einen, weil die Signale eine gewisse Laufzeit benötigen, um das Hindernis zu erreichen und zu einer Sende-/ Empfangseinheit zurückzukehren, zum anderen, weil nicht alle Sende-/ Empfangseinheiten gleichzeitig senden können (nur bei stochastischer Kodierung kann quasi-parallel gesendet werden, dann müssen mehrere Pulse korreliert werden), da sonst eine Unterscheidung der einzelnen Direkt- und Kreuzechos beim Empfang nicht möglich wäre. Das Zeitintervall, in dem die Impulse ausgesendet und die zugehörigen Direkt- und Kreuzecholaufzeiten erfasst werden, sei aber so kurz bzw. eine eventuelle Eigenbewegung des Fahrzeuges so langsam, dass die Eigenbewegung in diesem Zeitintervall zu keiner nennenswerten Verfälschung der Messergebnisse führt.

Um eine solche Verfälschung auszuschließen, ist bei einer Ausgestaltung der Echosignalüberwachungsvorrichtung ein Geschwindigkeitssignaleingang vorgesehen, der z. B. an den Tachometer des Fahrzeugs gekoppelt ist, und die Steuereinheit geht nur dann in dem Kalibrierbetriebszustand über, wenn das an diesem Eingang anliegende Signal eine Fahrzeuggeschwindigkeit unterhalb eines (in Abhängigkeit von der Arbeitsgeschwindigkeit der Echosigrialüberwachungsvorrichtung) geeignet gewählten Grenzwerts anzeigt. Alternativ ist es aber auch möglich, dass die Steuereinheit im Normalbetriebszustand die Geschwindigkeit des Fahrzeugs anhand der Veränderung der gemessenen Echolaufzeiten zwischen zwei Messungen schätzt und die so geschätzte Geschwindigkeit mit dem Grenzwert vergleicht, um so festzustellen, ob ein geeignetes Kalibrierszenario vorliegt.

Während im Normalbetriebszustand anhand der Frage, ob die Kreuzecholaufzeit die Beziehung (1) erfüllt, eine Klassifizierung des Hindernisses nach einem der oben genannten Typen durchgeführt werden kann, wird im Kalibrierbetriebszustand vorausgesetzt, dass das Hindernis geradlinig ist. Unter dieser Voraussetzung kann durch Einsetzen der mit einem Paar von Sende-/ Empfangseinheiten 1_i und 1_k gemessenen Echolaufzeiten T_ii, T_kk und T_ik (=T_ki) in die nach x_ik aufgelöste Gleichung (1) x_ik berechnet werden.

Um die Genauigkeit der Berechnung von x_ik zu verbessern, wird für jedes Paar von Sende-/ Empfangseinheiten 1_i, 1_k eine Mehrzahl von Direkt- und Kreuzecholaufzeiten bestimmt, und der aus der Mehrzahl von Messungen resultierende Mittelwert wird als Messwert für den Abstand x_ik verwendet.

Bei der Mittelwertbildung gehen nicht alle gemessenen Echolaufzeiten mit dem gleichen Gewicht ein. Bei der Gewichtung sind mehrere Aspekte zu berücksichtigen. Ein erster ist die Geometrie, die mit einem Geometrie-Güte-Maß (s.o.) beschrieben werden kann. Das Geometrie-Güte-Maß läßt sich aus den aktuellen Positionsschätzungen, den aktuellen Abstandsmessungen sowie der Kovarianzmatrix der Abstandsmessungen berechnen. Durch die Verfolgung der zu erwartenden Schätzgenauigkeit (Geometrie-Güte) bei laufender Kalibrierung zur Gewichtung der Einzelmessungen wird somit eine erhöhte Genauigkeit der Sensorpositionsschätzung erricht. Es gilt z.B.: Wenn die Laufzeit des Kreuzechos nur unwesentlich größer als die der beiden Direktechos ist oder zwischen beiden liegt, so bedeutet dies, dass das Kreuzecho am Hindernis unter einem kleinen Winkel reflektiert worden ist. Die Laufzeit ist dann nur wenig vom Abstand x_ik abhängig, so dass sich Fehler bei der Messung der Laufzeit stark auf den aus einer solchen Messung berechneten Abstand x_ik auswirken. Ist die Laufzeit des Kreuzechos hingegen deutlich größer als die der Direktechos, so ist der Reflexionswinkel am Hindernis groß, und der Einfluss eines Messfehlers bei der Messung von T_ik auf den aus einer solchen Messung berechneten Abstand x_ik ist gering. Hinzu kommen Einflüsse der Strahlcharakteristik der Sende-/ Empfangseinheiten: Sende- und Empfangseffizienz der Sende-/ Empfangseinheiten sind bei großen Abstrahlungs- und Empfangswinkeln schlechter als bei kleinen, so dass im ersteren Fall die Amplitude des empfangenen Echosignals trotz kurzer Laufzeit gering ist. Wie stark der Abfall der Sende- und Empfahgseffizienz zu großen Winkeln ist, hängt von der Bauart der Sende-/ Empfangseinheiten ab. Aus der Gesamtheit dieser Einflüsse kann man vorab eine von Direkt- und Kreuzecholaufzeiten abhängige Gewichtungsfunktion formulieren, die in Form eines ausführbaren Programmcodes oder einer Tabelle an der Steuereinheit fest abgespeichert wird und für eine Kombination von Laufzeiten das Gewicht angibt, mit dem der daraus berechnete Abstand x_ik in einen zu bildenden Mittelwert eingeht.

Wie oben bereits angegeben, kann die erfindungsgemäße Echoüberwachungsvorrichtung die Fähigkeit aufweisen, von ihr erfasste Hindernisse nach ihrer Gestalt in eine Mehrzahl von Klassen zu sortieren und so eine gerade Wand, die zur Durchführung einer Kalibrierung geeignet ist, selbsttätig zu erkennen. Diese Erkennung setzt voraus, dass die Vorrichtung, um Gl. (1) anwenden zu können, über einen Anfangs-Schätzwert $x_0\_ik$ für x_ik und über eine Abschätzung e der möglichen Abweichung dieses Anfangswertes vom tatsächlichen Wert des Abstands verfügt. Die Steuereinheit erkennt dann ein Hindernis als gerade und für eine Kalibrierung geeignet, wenn (1) im Rahmen der Abweichung e erfüllt ist:

$$((x_{ik}-e)/c)^2+(T_{ii})(T_{kk})$$

$$< T_{ik}^2 <$$

$$((x_{ik}+e)/c)^2+(T_{ii})(T_{kk}). \qquad (2)$$

Nachdem anhand dieses Hindernisses eine Kalibrierung durchgeführt worden ist, ersetzt die Steuereinheit den Anfangs-Schätzwert $x_{0\_ik}$ durch den in der Kalibrierung erhaltenen Mittelwert $x_{ik}$ und die Genauigkeit e durch die Standardabweichung des Mittelwertes $x_{ik}$ oder eine vergleichbare Größe, die ein Maß für die mögliche Abweichung zwischen dem Messwert $x_{ik}$ und der tatsächlichen Entfernung der Sende-/ Empfangseinheiten $1_i$ und $1_k$ darstellt. Durch wiederholtes Kalibrieren mit von Mal zu Mal abnehmender Abweichung e kann der Abstand $x_{ik}$ schließlich mit hoher Genauigkeit erfasst werden.

Das oben beschriebene Verfahren wird bei einer Kalibrierung für alle möglichen Paare von Sende-/ Empfangseinheiten der Echosignalüberwachungsvorrichtung durchgeführt, die in der Lage sind, ein Kreuzecho voneinander zu empfangen.

Wenn die Echosignalüberwachungsvorrichtung n Sende-/ Empfangseinheiten umfasst, so können diese zu insgesamt n(n-1)/2 Paaren kombiniert werden. Wenn bei allen diesen Paaren die Sende-/ Empfangseinheiten in der Lage sind, ein Kreuzecho von der jeweils anderen Einheit des Paars zu empfangen, so werden insgesamt n(n-1)/2 Abstandsmesswerte gewonnen. Sobald n größer ist als 4, ist die Zahl der Messwerte größer als die Zahl der Freiheitsgrade in der Anordnung der Einheiten; in einem solchen Fall werden die tatsächlichen Entfernungen der Einheiten voneinander aus den jeweils gemessenen Werten durch Anpassen unter Minimierung der quadrierten Fehler berechnet. Derartige Verfahren, auch als Least-Square-Fits bezeichnet, sind in der Messdatenverarbeitung gut bekannt und werden deshalb hier nicht eigens erläutert.

Wie man leicht sieht, ist die Anwendlbarkeit des oben beschriebenen Verfahens im Prinzip unabhängig von der Art und Weise, wie die Sendezeitpunkte der einzelnen Sende-/ Empfangseinheiten festgelegt werden. Es ist daher möglich, diese im Zeitmultiplex zu betreiben, derart, dass nach Aussenden eines Impulses durch eine Sende-/ Empfangseinheit erst das Eintreffen von Direkt- und Kreuzechos abgewartet wird, bevor eine andere Sende-/ Empfangseinheit einen weiteren Impuls sendet. Bei dieser Zeitmultiplexsteuerung sind die Echosignale zwar relativ einfach auszuwerten, weil stets eindeutig feststeht, welchem Sendeimpuls ein erfasstes Echo zuzuordnen ist; sie hat jedoch den Nachteil, dass lange Messzeiten erforderlich sind. Es ist daher im allgemeinen mit der Zeitmultiplexsteuerung nicht möglich, eine Klassifizierung der erfassten Hindernisse und damit einen selbsttätigen Übergang in den Kalibrierbetriebszustand zu realisieren. Es ist aber auch bei Zeitmultiplexsteuerung durchaus möglich, die Kalibrierung durchzuführen, indem nach dem Einbau der Echosignalüberwachungsvorrichtung das Fahrzeug in einer Mehrzahl von Positionen vor einer Wand aufgestellt wird und Messungen der Echolaufzeiten in den verschiedenen Positionen jeweils von Hand ausgelöst werden.

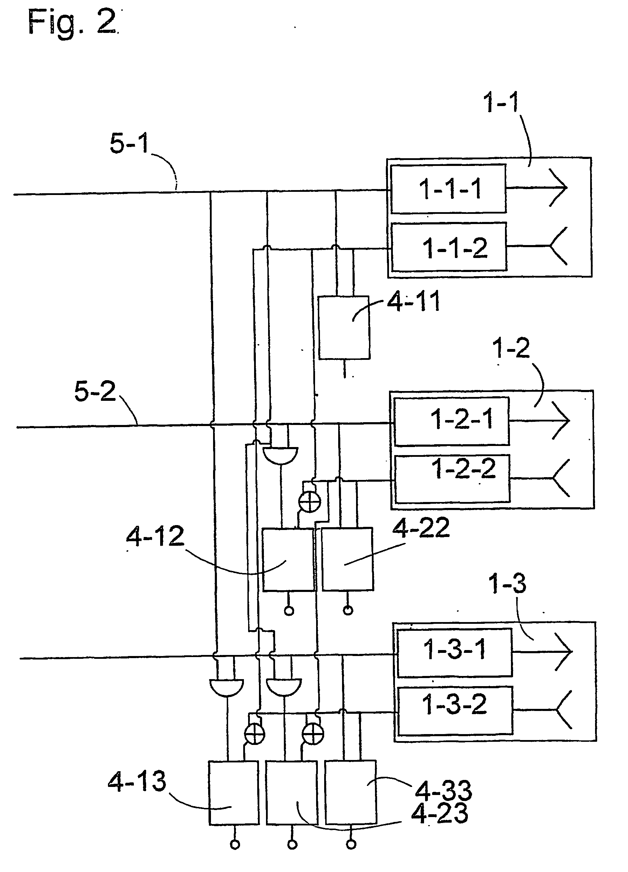

Vorteilhafter ist jedoch eine.stochastische Steuerung der Sendezeitpunkte der einzelnen Sende-/ Empfangseinheiten durch die Steuereinheit. Eine Schaltungsanordnung zur Auswertung der durch eine solche Steuerung erhaltenen Echosignale ist ausschnittweise in Fig 2 gezeigt. Die Figur zeigt drei der Sende-/ Empfangseinheiten, $1\_1$, $1\_2$ und $1\_3$, jeweils untergliedert in eine Sendeeinheit $1_{i}\_1$ und eine Empfangseinheit $1_{i}\_2$, i=1, 2, 3. Jede Sendeeinheit empfängt über eine Eingangsleitung $5_i$ ein Triggersignal von der Steuereinheit, das sie veranlasst, einen Impuls auszusenden. Das gleiche Triggersignal wird jeweils auch von einem Triggereingang eines adaptiven Filters $4_{ii}$ empfangen, dessen Signaleingang an einen Signalausgang der Empfangseinheit $1_{i}\_2$ angeschlossen ist. Das Echo auf den ausgesendeten Impuls wird von der Empfangseinheit $1_{i}\_2$ jeweils mit der Zeitverzögerung $T_{ii}$ empfangen, die sich bei langsamer Bewegung des Fahrzeugs nur langsam ändert, so dass sich die Filtercharakteristik des adaptiven Filters an diese Zeitverzögerung anpassen und das Direktecho der Sende-/ Empfangseinheit $1_i$ mit hoher Zuverlässigkeit aus dem Ausgangssignal der Empfangseinheit extrahieren kann, auch wenn zu zufällig verteilten Zeitpunkten Kreuzechos von anderen Sendeeinheiten darin enthalten sind.

Weitere adaptive Filter $4_{ik}$, mit i≠k, haben jeweils einen über einen Addierer mit den Ausgängen der Empfangseinheiten $1_{i}\_2$, $1_{k}\_2$ verbundenen Signaleingang und einen über ein Oder-Gatter mit den Triggersignalen $5_i$, $5_k$ verbundenen Triggereingang. Sie werden jeweils beim Senden eines Impulses durch die Sendeeinheit $1_{i}\_1$ bzw. $1_{k}\_1$ getriggert und Erfassen die Laufzeit des Kreuzechos von der Sendeeinheit $1_{i}\_1$ zur Empfangseinheit $1_{k}\_2$ bzw. von $1_{k}\_2$ zu $1_{i}\_2$. Da beide Kreuzecholaufzeiten gleich sind, genügt zu ihrer Erfassung ein Filter, so dass die Anordnung insgesamt n(n+1)/2 adaptive Filter benötigt, wenn n die Zahl der Sende-/ Empfangseinheiten ist.

Da die Energie eines nach Reflexion an einem Hindernis zu einer Empfängereinheit zurückkehrenden Impulses um so niedriger ist, je größer die Entfernung des Hindernisses ist, sind nach einer weiterentwickelten Ausgestaltung die Empfängereinheiten mit einer zeitlich variablen Detektionsschwelle ausgestattet, die im Ausgangssignal der Empfangseinheiten Signalbeiträge unterdrückt, deren Intensität die Detektionsschwelle nicht erreicht. Diese Schwelle hat unmittelbar nach Aussenden eines Schallimpulses durch die Sendeeinheit der betreffenden Sende-/ Empfangseinheit ihren höchsten Wert und nimmt dann kontinuierlich ab. So wird sichergestellt, dass kurz nach Aussenden des Impulses nur solche Signale von der Empfangseinheit erfasst und ausgegeben werden, die ihrer Stärke nach ein Echo des Impulses darstellen können, und dass andererseits auch Echoimpulse von weit entfernten Hindernissen zuverlässig erfasst werden.

Wenn die von der Steuereinheit zufällig festgelegten Sendezeitpunkte der einzelnen Sende-/ Empfangseinheiten völlig unkorreliert sind, kann die Verwendung der variablen Detektionsschwelle dazu führen, dass bei weit auseinanderliegenden Sendezeitpunkten von zwei Sende-/ Empfangseinheiten die zuletzt sendende Sende-/ Empfangseinheit das Kreuzecho, das auf den Impuls der zuerst sendenden Einheit zurückgeht, aufgrund der anfangs noch hohen Detektionsschwelle unterdrückt. Dieses Problem kann jedoch dadurch umgangen werden, dass die Steuereinheit die Sendezeitpunkte der einzelnen Sende-/ Empfangseinheiten nicht völlig unkorreliert festlegt, sondern Paaren von Sende-/ Empfangseinheiten, deren Abstand bevorzugt gemessen werden soll (etwa weil der bekannte Messwert des Abstands eine relativ hohe Unsicherheit e im Vergleich zu den Abständen anderer Paare aufweist) bevorzugt zeitlich benachbarte Sendezeitpunkte zuteilt, so dass beide Kreuzechos mit einer ausreichenden Intensität empfangen werden, um die Detektionsschwelle zu überwinden.

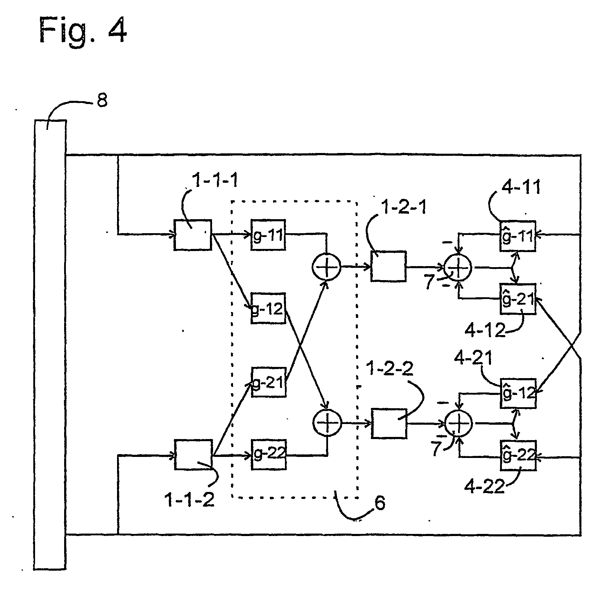

Fig. 3 zeigt ein Prinzipschema eines adaptiven Filters 4. Ein Eingangssignal x[k] wird einem unbekannten System 6, dessen Verhalten mit dem adaptiven Filter 4 reproduziert werden soll, und einem Triggereingang des Filters 4 zugeführt. Das unbekannte System 6 hat eine Impulsantwort g[k]. Das Filter 4 gleicht seine Koeffizienten in bekannter Weise automatisch so ab, dass sich die Impulsantwort g[k] des Filters 4 im Laufe mehrerer Arbeitszyklen des Filters 4 der Impulsantwort g[k] des Systems 6 schrittweise angleicht. Zu diesem Zweck ist das Ausgangssignal des Filters 4 über einen Addierer 7, der die Summe e[k] aus der vorzeichenvertauschten Ausgabe y[k] des Filters 7 und der mit einer Störung (Rauschen) n[k] überlagerten Antwort y[k] des unbekannten Systems bildet, an einen Korrektureingang des Filters 4 rückgekoppelt, und die Koeffizienten werden in Abhängigkeit von e[k] schrittweise angepasst. Die Summe e[k] stellt gewissermaßen den Anpassungsfehler des adaptiven Filters dar. Aus der Impulsantwort g[k] (bzw. der Gesamtheit der am Filter 4 eingestellten Koeffizienten) ist die Laufzeit des durch das Filter zu erfassenden Echosignals ablesbar.

Fig. 4 veranschaulicht das Prinzip der Signalverarbeitung in einer mit adaptiven Filtern ausgestatteten Echosignalüberwachungsvorrichtung gemäß der vorliegenden Erfindung.

Die bereits erwähnte, in Fig. 4 mit dem Bezugszeichen 8 bezeichnete Steuereinheit veranlasst zu stochastischen festgelegten Zeitpunkten die Sendeeinheiten 1_1_1 und 1_1_2, Signalimpulse auszusenden. Diese Impulse treffen auf Hindernisse in der Umgebung der Überwachungsvorrichtung und werden von diesen reflektiert. Reflektierte Echosignale überlagern sich mit einem durch die jeweiligen Sendezeitpunkte festgelegten Zeitversatz an den Empfangseinheiten 1_2_1 bzw. 1_2_2. Die Entstehung der von den Empfangseinheiten empfangenen Echosignale aus den von den Sendeeinheiten ausgestrahlten Impulsen ist in der Fig. 4 durch ein gestricheltes Rechteck 6 mit vier Filtern mit Antwortfunktionen g_ij, i,j=1,2 die jeweils die Antwort der Umgebung auf einen von der Sendeeinheit 1_1_i gesendeten Impuls beschreiben, die an der Empfangseinheit 1_2_j empfangen wird, sowie zwei Addierer, die die Überlagerung von Direkt- und Kreuzechos zum Empfangssignal jeder Empfangseinheit darstellen.

Ein Ausgang der Steuereinheit 8, der einen Impuls an die Sendeeinheit 1_1_i liefert, ist gleichzeitig mit Triggereingängen von adaptiven Filtern 4_ij verbunden, deren Impulsantworten g_ij jeweils die Impulsantworten g_ij der Umgebung approximieren. Die Ausgangssignale der adaptiven Filter 4_11, 4_12 werden in einem Addierer 7 dem Empfangssignal der Empfangseinheit 1_2_1 mit umgekehrtem Vorzeichen überlagert; die Differenz zwischen dem Empfangssignal und der Summe der von den Filtern 4_11, 4_12 approximierten Signale dient wiederum zur Steuerung der Koeffizienten der Filter. Obwohl eine Mehrzahl von adaptiven Filtern jeweils über das Ausgangssignal einer einzigen Empfangseinheit 1_2_i adaptiert werden, zeigt sich, dass die Koeffizienten der Filter schnell gegen einen stabilen Zustand konvergieren.

Aus der zeitlichen Entwicklung der Koeffizienten der einzelnen Filter 4_ij ist die Steuereinheit 8 in der Lage, die Geschwindigkeiten zu ermitteln, mit denen sich ein für einen bestimmten Beitrag des empfangenen Echosignals verantwortliches Hindernis relativ zur Überwachungsvorrichtung bewegt. Um die Konvergenz der Filter zusätzlich zu beschleunigen, kann vorgesehen werden, dass die Steuereinheit 8 anhand eines gegenwärtigen Koeffizientensatzes jedes der Filter 4_ij einen zu einem gegebenen zukünftigen Zeitpunkt erwarteten Koeffizientensatz berechnet und diesen Koeffizientensatz zu dem betreffenden Zeitpunkt am jeweiligen Filter 4_ij einstellt. Es ist davon auszugehen, dass ein solcher extrapplierter Koeffizientensatz zu dem betreffenden zukünftigen Zeitpunkt eine bessere Näherung g_ij der dann geltenden Antwortfunktion g_ij der Umgebung 6 liefern wird, als ein unverändert gebliebener Koeffizientensatz, so dass eine brauchbare Anpassung der approximierten Impulsantwort g_ij an die tatsächliche Impulsantwort g_ij zu dem zukünftigen Zeitpunkt mit einer verringerten Zahl von Messzyklen und infolgedessen in kürzerer Zeit erzielbar ist, als wenn die Extrapolation nicht vorgenommen wird.

**Patentansprüche**

1. Echosignalüberwachungsvorrichtung mit einer Mehrzahl von Sende- und Empfangseinheiten (1_1, ..., 1_4) zum Aussenden eines Signals und Empfangen eines von einem externen Gegenstand zurückgeworfenen Echos, wobei der externe Gegenstand als ein geradliniges Hindernis ausgeführt ist, und mit einer Auswertungseinheit (8) zum Abschätzen der Entfernung von der Überwachungsvorrichtung zu dem externen Gegenstand anhand der empfangenen Echos, **dadurch gekennzeichnet, dass** sie einen Betriebszustand zum Berechnen der relativen Position der Sende- und Empfangseinheit zueinander anhand von zurückgeworfenen wiederholt gemessenen Direkt- und Kreuzechos aufweist.

2. Echosignalüberwachungsvorrichtung nach Anspruch 1, **dadurch gekennzeichnet, dass** sie überprüft, ob die Laufzeiten (T_ik) der empfangenen Echos vorgegebene Bedingungen erfüllen und wenn dies der Fall ist, in den Betriebszustand zum Berechnen der relativen Position der Sende- und Empfangseinheiten zueinander übergeht.

3. Echosignalüberwachungsvorrichtung nach Anspruch 2, **dadurch gekennzeichnet, dass** sie einen Signaleingang für ein Geschwindigkeitssignal einer Fahrzeuggeschwindigkeit aufweist und in den Betriebszustand zum Berechnen der relativen Position der Sende- und Empfangseinheiten zueinander nur dann übergeht, wenn das an dem Eingang anliegende Geschwindigkeitssignal eine Geschwindigkeit unterhalb eines vorgegebenen Grenzwerts anzeigt.

4. Echosignalüberwachungsvorrichtung nach Anspruch 2, **dadurch gekennzeichnet, dass** sie in der Lage ist, anhand der zeitlichen Änderung der Laufzeiten von nacheinander empfangenen Echos eine Geschwindigkeit eines die Echos liefernden Objekts abzuschätzen und in den Betriebszustand zum Berechnen der relativen Position der Sende- und Empfangseinheiten zueinander nur dann übergeht, wenn die abgeschätzte Geschwindigkeit unterhalb eines vorgegebenen Grenzwerts liegt.

5. Echosignalüberwachungsvorrichtung nach einem der vorhergehenden Ansprüche, **dadurch gekennzeichnet, dass** die Sende-/Empfangseinheiten (1_1, ... 1_4) eine Erfassungsschwelle aufweisen, die die Amplitude eines empfangenen Echos überschreiten muss, um von der Sende-/Empfangseinheit (1_1, ..., 1_4) erfasst zu werden, und dass die Erfassungsschwelle von einem hohen Wert unmittelbar nach dem Aussenden eines Signals durch die Sende-/Empfangseinheit allmählich auf einen niedrigen Wert abfällt.

6. Echosignalüberwachungsvorrichtung nach einem der vorhergehenden Ansprüche, **dadurch gekennzeichnet, dass** sie eine Steuereinheit (8) zum Festlegen von Zeitpunkten zum Aussenden eines impulsförmigen Signals für die Sende-/Empfangseinheiten nach einem stochastischen Muster aufweist.

7. Echosignalüberwachungsvorrichtung nach einem der vorhergehenden Ansprüche, **dadurch gekennzeichnet, dass** den Sende-/Empfangseinheiten (1_1, ..., 1_4) jeweils adaptive Filter (4_11, 4_12, 4_21, 4_22) zugeordnet sind.

8. Verfahren zum Bestimmen der relativen Position einer Mehrzahl von Sende- und Empfangseinheiten (1_1, ..., 1_4) einer Echosignalüberwachungsvorrichtung, wobei Echosignale von einem externen, geradlinigen Hindernis reflektiert werden, wobei für wenigstens ein Paar (1_1, 1_2) von Sende- und Empfangseinheiten die Direkt-Echolaufzeiten (T_11, T_22) von einer Sende- und Empfangseinheit (1_1, 1_2) und zurück zur gleichen Sende- und Empfangseinheit und die Kreuzecholaufzeit (T_12) von einer der Sende- und Empfangseinheiten (1_1) zur anderen Sende- und Empfangseinheit (1_2) des Paars wiederholt gemessen werden und der Abstand (x_12) zwischen den Sende- und Empfangseinheiten anhand der gemessenen Laufzeiten (T_11, T_22, T_12) berechnet wird.

9. Verfahren nach Anspruch 8, **dadurch gekennzeichnet, dass** die Echolaufzeiten wiederholt gemessen werden und die Berechnung des Abstands zwischen den Sende- und Empfangseinheiten eine Mittelung über die wiederholten Messungen umfasst.

10. Verfahren nach Anspruch 9, **dadurch gekennzeichnet, dass** für eine gegebene Konstellation von Sensoranordnungen und Hindernissen ein Geometrie-Gütemaß angegeben wird, welches zur Gewichtung von Einzelmessungen herangezogen wird.

11. Verfahren nach Anspruch 9 oder 10, **dadurch gekennzeichnet, dass** die wiederholten Messungen im Laufe einer Bewegung der Echosignalüberwachungsvorrichtung durchgeführt werden.

12. Verfahren nach einem der Ansprüche 8 bis 11, **dadurch gekennzeichnet, dass** die Echolaufzeiten für eine Mehrzahl von Paaren von Sende-/Empfangseinheiten gemessen werden.

13. Verfahren nach Anspruch 12, **dadurch gekennzeichnet, dass** die Anzahl der Paare so gewählt wird, dass redundante Messungen aufgenommen werden, und dass die Positionen der Sende-/Empfangseinheiten (1_1, ..., 1_4) aus den redundanten Messungen mit Hilfe eines Fehlerminimierungsverfahrens, vorzugsweise des Fehlerquadratminimierungsverfahrens, gewonnen werden.

14. Verfahren nach Anspruch 13 und Anspruch 9, **dadurch gekennzeichnet, dass** die Zuverlässigkeit einer Messung einer Echolaufzeit anhand der Fluktuation der gemessenen Echolaufzeit bei den wiederholten Messungen beurteilt wird und dass die Messung bei der Fehlerminimierung mit einer Gewichtung berücksichtigt wird, die um so größer ist, je kleiner die Fluktuation ist.

15. Verfahren nach Anspruch 12 oder 13, **dadurch gekennzeichnet, dass** die Zuverlässigkeit einer Messung einer Kreuzecholaufzeit anhand ihres Verhältnisses zu den Direktecholaufzeiten der an der Messung der Kreuzecholaufzeit beteiligten Sende-/Empfangseinheiten beurteilt wird und dass die Messung bei der Fehlerminimierung mit einer Gewichtung berücksichtigt wird, die umso größer ist, je größer die Kreuzecholaufzeit im Verhältnis zu den Direktecholaufzeiten ist.

**Claims**

1. Echo-signal monitoring apparatus having a plurality of transmission and reception units (1_1, ..., 1_4) for transmitting a signal and receiving an echo returned by an external object, the external object being in the form of a rectilinear obstacle, and having an evaluation unit (8) for estimating the distance from the monitoring apparatus to the external object using the received echoes, **characterized in that** it has an operating state for calculating the relative position of the transmission and reception units with respect to one another using returned, repeatedly measured direct and cross-echoes.

2. Echo-signal monitoring apparatus according to Claim 1, **characterized in that** it checks whether the delay times (T_ik) of the received echoes meet prescribed conditions and, if this is the case, changes to the operating state for calculating the relative position of the transmission and reception units with respect to one another.

3. Echo-signal monitoring apparatus according to Claim 2, **characterized in that** it has a signal input for a speed signal for a vehicle speed and changes to the operating state for calculating the relative position of the transmission and reception units with respect to one another only if the speed signal applied to the input indicates a speed below a prescribed limit value.

4. Echo-signal monitoring apparatus according to Claim 2, **characterized in that** it is able to use the change in the delay times of successively received echoes over time to estimate a speed for an object delivering the echoes and changes to the operating state for calculating the relative position of the transmission and reception units with respect to one another only if the estimated speed is below a prescribed limit value.

5. Echo-signal monitoring apparatus according to one of the preceding claims, **characterized in that** the transmission/reception units (1_1, ..., 1_4) have a detection threshold which the amplitude of a received echo must exceed in order to be detected by the transmission/reception unit (1_1, ..., 1_4), and **in that** the detection threshold falls gradually from a high value to a low value directly after the transmission of a signal by the transmission/reception unit.

6. Echo-signal monitoring apparatus according to one of the preceding claims, **characterized in that** it has a control unit (8) for stipulating times for transmitting a pulsed signal for the transmission/reception units on the basis of a stochastic pattern.

7. Echo-signal monitoring apparatus according to one of the preceding claims, **characterized in that** the transmission/reception units (1_1, ..., 1_4) each have associated adaptive filters (4_11, 4_12, 4_21, 4_22).

8. Method for determining the relative position of a plurality of transmission and reception units (1_1, ..., 1_4) in an echo-signal monitoring apparatus, where echo signals are reflected by an external, rectilinear obstacle, where for at least one pair (1_1, 1_2) of transmission and reception units the direct-echo delay times (T_11, T_22) from a transmission and reception unit (1_1, 1_2) and back to the same transmission and reception unit and the cross-echo delay time (T_12) from one of the transmission and reception units (1_1) to the other transmission and reception unit (1_2) in the pair are repeatedly measured and the interval (x_12) between the transmission and reception units is calculated using the measured delay times (T_11, T_22, T_12).

9. Method according to Claim 8, **characterized in that** the echo delay times are repeatedly measured and the calculation of the interval between the transmission and reception units includes averaging over the repeated measurements.

10. Method according to Claim 9, **characterized in that** for a given configuration of sensor arrangements and obstacles a measure of geometric quality is indicated which is used to weight individual measurements.

11. Method according to Claim 9 or 10, **characterized in that** the repeated measurements are performed in the course of a movement by the echo-signal monitoring apparatus.

12. Method according to one of Claims 8 to 11, **characterized in that** the echo delay times are measured for a plurality of pairs of transmission/reception units.

13. Method according to Claim 12, **characterized in that** the number of pairs is chosen such that redundant measurements are recorded, and **in that** the positions of the transmission/reception units (1_1, ..., 1_4) are obtained from the redundant measurements using an error-minimization method, preferably the error-square minimization method.

14. Method according to Claim 13 and Claim 9, **characterized in that** the reliability of an echo delay time measurement is assessed using the fluctuation in the measured echo delay time for the repeated measurements, and **in that** the measurement is taken into account in the error minimization using a weighting which is larger the smaller the fluctuation.

15. Method according to Claim 12 or 13, **characterized in that** the reliability of a cross-echo delay time measurement is assessed using the ratio of the cross-echo delay time to the direct-echo delay times of the transmission/reception units involved in the measurement of the cross-echo delay time, and **in that** the measurement is taken into account in the error minimization using a weighting which is larger the longer the cross-echo delay time in relation to the direct-echo delay times.

**Revendications**

1. Dispositif de surveillance utilisant des signaux d'écho comprenant une pluralité d'unités émettrices et d'unités réceptrices (1_1, ..., 1_4) pour émettre un signal et recevoir un écho renvoyé par un objet extérieur constitué par un obstacle rectiligne, ainsi qu'une unité d'exploitation (8) pour évaluer au moyen des échos reçus la distance entre le dispositif de surveillance et l'objet extérieur, **caractérisé en ce que** ce dispositif présente un état de fonctionnement pour calculer la position relative de l'unité émettrice et de l'unité réceptrice au moyen des échos directs et des échos croisés renvoyés et mesurés à répétition.

2. Dispositif de surveillance selon la revendication 1, **caractérisé en ce qu'** il contrôle si les temps de parcours (T_ik) des échos reçus satisfont les conditions prédéfinies et si c'est le cas, il passe à l'état de fonctionnement permettant de calculer la position relative des unités émettrices et réceptrices.

3. Dispositif de surveillance selon la revendication 2, **caractérisé en ce qu'** il présente une entrée pour un signal de vitesse d'un véhicule automobile et il passe à l'état de fonctionnement permettant de calculer la position relative des unités émettrices et réceptrices seulement si le signal présent à l'entrée indique une vitesse inférieure à une vitesse limite prédéfinie.

4. Dispositif de surveillance selon la revendication 2, **caractérisé en ce qu'** il est capable, à l'aide de la modification dans le temps des durées de parcours des échos reçus successivement, d'évaluer une vitesse d'un objet délivrant l'écho, et il passe à l'état de fonctionnement permettant de calculer la position relative des unités émettrices et réceptrices seulement si la vitesse évaluée est inférieure à une vitesse limite prédéfinie.

5. Dispositif de surveillance selon l'une des revendications précédentes, **caractérisé en ce que** les unités émettrices/réceptrices (1_1, ..., 1_4) présentent un seuil de saisie qui doit dépasser l'amplitude d'un écho reçu pour être saisi par l'unité émettrice/réceptrice (1_1, ..., 1_4) et ce seuil de saisie, partant d'une valeur élevée, s'abaisse progressivement à une valeur faible, immédiatement après l'émission d'un signal par l'unité émettrice/réceptrice.

6. Dispositif de surveillance selon l'une des revendications précédentes, **caractérisé en ce qu'** il présente une unité de commande (8) pour déterminer, selon un modèle stochastique, des instants d'émission d'un signal pulsé pour les unités émettrices/réceptrices.

7. Dispositif de surveillance selon l'une des revendications précédentes, **caractérisé en ce que** à chacune des unités émettrices/réceptrices (1_1, ..., 1_4) sont associés des filtres adaptatifs (4_11, 4_12, 4_21, 4_22).

**8.** Procédé pour déterminer la position relative d'une pluralités d'unités émettrices/réceptrices (1_1, ..., 1_4) d'un dispositif de surveillance utilisant des signaux écho, ces signaux étant réfléchis par un obstacle extérieur rectiligne, et pour au moins une paire (1_1, 1_2) d'unités émettrices et réceptrices, les temps de parcours de l'écho direct (T_11, T_22) partant de cette unité émettrice et réceptrice (1_1, 1_2) et y revenant, ainsi que le temps de parcours de l'écho croisé (T_12) allant d'une des unités émettrices/réceptrices (1_1) à l'autre unité émettrice/réceptrice (1_2) de la paire sont mesurés à répétition et la distance (x_12) entre les unités émettrices/réceptrices est calculée au moyen des temps de parcours mesurés (T_11, T_22, T_12).

**9.** Procédé selon la revendication 8, **caractérisé en ce que** les temps de parcours des échos sont mesurés à répétition et le calcul de la distance entre les unités émettrices/réceptrices comprend le calcul de la moyenne des mesures répétées.

**10.** Procédé selon la revendication 9, **caractérisé en ce que** pour une constellation définie de dispositifs de captage et d'obstacles, est indiquée une mesure de qualité de la géométrie utilisée pour pondérer des mesures individuelles.

**11.** Procédé selon la revendication 9 ou 10, **caractérisé en ce que** les mesures répétées sont effectuées au cours d'un déplacement du dispositif de surveillance utilisant des signaux écho.

**12.** Procédé selon une des revendications 8 à 11, **caractérisé en ce que** les temps de parcours de l'écho sont mesurés pour une pluralité de paires d'unités émettrices/réceptrices.

**13.** Procédé selon la revendication 12, **caractérisé en ce que** le nombre des paires est choisi de manière à recevoir des mesures redondantes, et les positions des unités émettrices/réceptrices (1_1, ..., 1_4) sont établies à partir des mesures redondantes à l'aide d'un procédé de minimisation des erreurs, de préférence le procédé quadratique de minimisation des erreurs.

**14.** Procédé selon les revendications 13 et 9, **caractérisé en ce que** la fiabilité d'une mesure d'un temps de parcours d'écho est appréciée à l'aide de la fluctuation des temps de parcours d'écho mesurés au cours des mesures répétées, et la mesure est prise en compte dans la minimisation des erreurs avec une pondération d'autant plus grande que la fluctuation est petite.

**15.** Procédé selon la revendication 12 ou 13, **caractérisé en ce que** la fiabilité d'une mesure du temps de parcours d'un écho croisé est appréciée à l'aide de son rapport avec les temps de parcours des échos directs des unités émettrices/réceptrices participant à la mesure du temps de parcours de l'écho croisé et la mesure est prise en compte dans la minimisation des erreurs avec une pondération d'autant plus grande qu'est grande la durée du parcours de l'écho choisi par rapport aux durées du parcours de l'écho direct.

# Fig. 1

2

3

x-12

1-1

1-2

1-3

1-4

# Fig. 3

6

n[k]

x[k]

g[k]

ĝ[k]

ŷ[k]

7

4

−

$e[k] = y[k] - \hat{y}[k]$

# Fig. 2

Fig. 4